# EUROPÄISCHE PATENTSCHRIFT

(11) **EP 2 234 786 B1**
(45) Veröffentlichungstag und Bekanntmachung des Hinweises auf die Patenterteilung: **20.11.2013**
(21) Anmeldenummer: 08860132.3
(22) Anmeldetag: 21.11.2008
(51) Int. Cl.: B29C 45/54

(54) **KOLBENEINSPRITZEINHEIT FÜR EINE SPRITZGUSSMASCHINE**
PISTON INJECTION UNIT FOR AN INJECTION MOLDING MACHINE
UNITÉ D'INJECTION À PISTON POUR MACHINE DE MOULAGE PAR INJECTION

(30) Priorität: 10.12.2007 DE 102007059432
(43) Veröffentlichungstag der Anmeldung: 06.10.2010
(73) Patentinhaber: Zhafir Plastics Machinery GmbH, 92263 Ebermannsdorf (DE)
(72) Erfinder: FRITZLAR, Volker, 92224 Amberg (DE); ISSEL, Dirk, 91207 Lauf (DE); FRANZ, Steffen, 92224 Amberg (DE); RABE, Hans, 92289 Ursensollen (DE); MEYER, Jörg, 92245 Kümmersbruck (DE); FENSTERER, Andreas, 92224 Amberg (DE)
(74) Vertreter: Lang, Christian
(86) Internationale Anmeldenummer: PCT/EP2008/066036
(87) Internationale Veröffentlichungsnummer: WO 2009/074445

(56) Entgegenhaltungen:
- WO-A-00/37233
- FR-A- 1 193 335
- GB-A- 808 369
- JP-A- 2006 341 527

## Beschreibung

### HINTERGRUND DER ERFINDUNG

### GEBIET DER ERFINDUNG

Die vorliegende Erfindung betrifft eine Kolbeneinspritzeinheit für eine Spritzgussmaschine nach dem Oberbegriff des Anspruchs 1.

### STAND DER TECHNIK

Spritzgussmaschinen finden in der Technik für die Herstellung unterschiedlichster Gegenstände eine breite Verwendung. Obwohl entsprechend eine Vielzahl von Spritzgussmaschinen im Einsatz ist und es ermöglichen, eine Vielfalt von Produkten in höchster Qualität herzustellen, besteht weiterhin ein Bedarf an Verbesserungen bzgl. der Spritzgusstechnologie.

Eine Problematik betrifft beispielsweise die Abdichtung zwischen Kolbenaußenwand und Zylinderinnenwand bei einer Kolbeneinspritzeinheit. Bei einer entsprechenden Kolbeneinspritzeinheit wird das zu spritzende Material in fließfähigem Zustand von einem Kolben, welcher in einem Zylinder geführt ist, durch eine an einem Ende des Zylinders angeordnete Düseneinheit gepresst. Durch den entsprechenden Druck kann es dazu kommen, dass fließfähiges Material in den Bereich zwischen Kolbenaußenwand und Zylinderinnenwand gelangt. Sofern das Material dort zu lange verbleibt, kann es aushärten oder mit anderen Substanzen reagieren, so dass unerwünschte Fremdpartikel entstehen, die einerseits die Reibung und den Verschleiß zwischen Kolben und Zylinder erhöhen und andererseits das herzustellende Produkt verunreinigen können, wenn sie in die Gießmasse zurückgelangen. Darüber hinaus besteht ein Problem darin, dass dieses überschüssige Material durch die Kolbenbewegung an dem der Düseneinheit gegenüber liegenden Ende des Zylinders in unkontrollierter Weise austritt und so ebenfalls zu Verunreinigungen führt.

Die DE 697 06 167 T2 bzw. die korrespondierende EP 0 906 180 B1 schlägt hierzu eine Einspritzvorrichtung vor, welche einen bestimmten Freiraum zwischen Außenwand des Kolbens und der Innenwand des Zylinders vorsieht. Der Freiraum wird speziell entsprechend den Viskositäten des zu spritzenden Materials gewählt, um einen schnellen Austausch des Materials in dem Freiraum zu ermöglichen und damit die oben erwähnte Partikelbildung zu vermeiden. Außerdem wird eine Ringnut an dem Kolben vorgesehen, um ein Ansaugen von Luft in den innen liegenden Bereich des Zylinders zu vermeiden. Allerdings weist eine derartige Vorrichtung durch die konstruktive Gestaltung weitere Probleme auf. So wird bei dieser Kolbeneinspritzeinheit das zu verspritzende Material seitlich in den Zylinder eingeführt, wobei der vordere Teil des Kolbens, der der Düseneinheit zugewandt ist, einen geringeren Durchmesser aufweist und so einen ringförmigen Raum bildet, über den das fließfähige Material vor dem eigentlichen Spritzvorgang in den Stauraum zwischen Düse und Kolben gelangen kann. Beim Spritzvorgang, bei dem der Kolben in Richtung Düse bewegt wird, um das Material im Stauraum durch die Düse zu pressen, wird der ringförmige Raum durch ein separates Dichtelement, welches sich im Stauraum vor dem Kolben befindet, abgedichtet. Allerdings ist durch die separate Ausführung des Abdichtelements (Ringrückstromsperre) und die entsprechend kleine Dimensionierung bei den vorherrschenden Spritzdrücken das Problem gegeben, dass die Abdichtung zwischen dem Stauraum und dem Kolben bzw. der Innenwand des Zylinders unbefriedigend ist. Außerdem ist durch den ringförmigen Raum zwischen dem vorderen Kolbenschaft und der Zylinderinnenwand ein großes Volumen gegeben, in dem das plastifizierte Material eine längere Zeit verweilt, wobei ein vollständiger, kurzfristiger Austausch durch Nachführen zum Spritzgusswerkzeug nicht sichergestellt ist.

Die Kolbenspritzeinheit der DE 697 06 167 T2 umfasst weiterhin ein Schneidelement am der Düseneinheit gegenüberliegenden Ende des Zylinders bzw. Kolbens, mit welchem überschüssiges Formmaterial, welches an dem Kolben an der Außenwand anhaftet und so in den hinteren, von der Düseneinheit abgewandten Seite des Kolbens gelangt, abgeschnitten wird. Dazu weist das Schneidelement eine kegelstumpfförmige Schneidfläche auf. Während dieses Schneidelement für feste, bereits ausgehärtete Partikel zufrieden stellend funktioniert, ist bei teilweise noch fließfähigem Material eine ausreichende Reinigung des Kolbens nicht gewährleistet.

Gleiches gilt für ein Ausstoßführungsteil, welches in der DE 699 21 059 T2 bzw. der korrespondierenden EP 0 992 333 B1 beschrieben ist. Hier ist zur entsprechenden Abfuhr des überschüssigen Materials eine zusätzliche Bandheizung erforderlich, um eine ausreichende Fließfähigkeit des Materials sicherzustellen.

Das Dokument WO-A-0037233 offenbart eine Kolbeneinspritzeinheit nach dem Oberbegriff des Anspruchs 1.

### OFFENBARUNG DER ERFINDUNG

### AUFGABE DER ERFINDUNG

Es ist deshalb Aufgabe der vorliegenden Erfindung, eine Kolbeneinspritzeinheit für eine Spritzgussmaschine bereitzustellen, welche das Problem der Behandlung überschüssigen Materials, welches in den Zwischenraum zwischen Kolben und Zylinderinnenwand gelangen kann, in einfacher und effektiver Weise löst, wobei die Kolbeneinspritzeinheit im Übrigen ausgewogene Eigenschaften bzgl. der erzielbaren Spritzergebnisse aufweisen soll. Insbesondere soll eine einfache und geeignete Zufuhr des zu spritzenden Materials bei einem einfachen und effektiven Aufbau der Kolbeneinspritzeinheit sowie leichter Bedienbarkeit gegeben sein.

### TECHNISCHE LÖSUNG

Diese Aufgabe wird gelöst mit einer Kolbeneinspritzeinheit mit den Merkmalen des Anspruchs 1. Vorteilhafte Ausgestaltungen sind Gegenstand der abhängigen Ansprüche.

Die vorliegende Erfindung betrifft eine Kolbeneinspritzeinheit mit einem Zylinder, einem darin verschiebbar geführten Kolben und einer an einem Ende des Zylinders angeordneten Düseneinheit. Ferner wird bei der erfindungsgemäßen Kolbeneinspritzeinheit das zu verspritzende Material seitlich im Bereich des Kolbenschaftes in den Zylinder eingeführt. Die Erfindung zeichnet sich nach einem ersten Aspekt der Erfindung dadurch aus, dass am vorderen Kolbenende, welches der Düseneinheit zugewandt ist, mindestens ein erster Dichtbereich vorgesehen ist, der eine Außenfläche des Kolbens und eine Innenfläche des Zylinders aufweist, die so gegenseitig flächig aneinander anliegen, dass sie diesen Bereich bestmöglich abdichten. Trotz der seitlichen Materialzufuhr im Bereich des Kolbenschaftes, welche Vorteile im Bereich der Maschinenauslegung und der Kolbenführung besitzt, ist es vorteilhaft, bereits am vorderen Ende des Kolbens, welches in direkte Anlage an das zu verspritzende Material gelangt, einen ersten Dichtbereich vorzusehen, um das Eindringen von Material in den Bereich zwischen Kolben und Zylinderinnenwand zu vermeiden.

Entsprechend der Gestaltung mit seitlicher Materialzufuhr in den Zylinder wird erfindungsgemäß ein Fließkanal für das fließfähige Material vorgesehen, welcher das an der Seite des Kolbens zugeführte fließfähige Material zu einem Auslass bzw. einer Mündung am Kolbenende führt, wobei die Mündung bzw. der Auslass beabstandet von der Außenfläche des Kolbens vorgesehen sein kann, da die Außenfläche den ersten Dichtbereich bildet. Mit einer derartigen Gestaltung ist es möglich, den Stauraum, in dem das fließfähige Material unter dem entsprechenden Spritzdruck vor dem Kolben steht, durch den ersten Dichtbereich von dem Zuführbereich für das fließfähige Material, also dem Fließkanal, abzutrennen.

Nach einem zweiten Aspekt der vorliegenden Erfindung, für den selbständig und in Kombination mit den anderen Aspekten der Erfindung Schutz begehrt wird, ist der Fließkanal so gestaltet, dass der Fließkanal beim Materialtransport von der Zuführöffnung zum Stauram vor dem Kolben vollständig durch nachfließendes Material gespült wird, so dass die Verweildauer des zu spritzenden Materials im Fließkanal kurz gehalten werden kann. Damit lassen sich unerwünschte und nachteilige Materialreaktionen im Fließkanal vermeiden. Unter vollständiger Spülung ist hierbei insbesondere zu verstehen, dass keine Toträume vorhanden sind, in denen Material durch nachfolgendes Material nicht mitgenommen wird. Vollständig meint jedoch nicht, dass die Fließfront in jedem Fall gerade und stabil ist. Vielmehr kann eine unterschiedliche Fließgeschwindigkeit und Vermischung von Material im Fließkanal vorliegen.

Es kann weiterhin mindestens ein zweiter Dichtbereich vorgesehen sein, welcher eine zusätzliche Abdichtung zwischen Kolben und Zylinderinnenwand bzgl. der hinteren, von der Düseneinheit abgewandten Seite des Kolbens gewährleistet und insbesondere gegen zumindest Teile des Fließkanals, also den Zuführbereich für das fließfähige Material, abdichtet.

Entsprechend kann der Fließkanal zumindest teilweise zwischen dem ersten und dem zweiten Dichtbereich vorgesehen sein.

Die Mündung des Fließkanals kann an der der Düseneinheit zugewandten Stirnseite des Kolbens in einem zentralen, der Kolbenlängsachse nahen Bereich und insbesondere konzentrisch zur Kolbenlängsachse vorgesehen sein. Damit ist ein konstruktiv günstiger Aufbau des an den Stauraum grenzenden Kolbenendes mit entsprechender Festigkeit und damit Dichtheit gewährleistet. Zur gleichmäßigen Verteilung des fließfähigen Materials kann die Mündung des Fließkanals mehrere Öffnungen aufweisen oder stern- oder kleeblattartig geformt sein.

Um ein Zurückfließen des in den Stauraum transportierten fließfähigen Materials beim Spritzvorgang zu vermeiden, kann im Fließkanal ein Rückschlagventil vorgesehen sein, welches den Fließkanal, also den Zuführbereich, abriegelt.

Das Rückschlagventil kann im Inneren des Kolbens vorgesehen sein und insbesondere durch einen in einem Verteilraum des Fließkanals in der Nähe der Mündung beweglich angeordneten Dichtkörper realisiert sein, der bei entsprechendem Druckaufbau die Fließkanalöffnung verschließt.

Der Fließkanal von der Zuführöffnung in der Zylinderwand zur Mündung an der Stirnseite des Kolbens umfasst eine axiale Nut im Kolben sowie eine Ringnut, welche benachbart zum ersten Dichtbereich vorgesehen sein kann. Die Ringnut, welche mit der axial verlaufenden Nut zusammenwirkt, hat bei Anordnung unmittelbar benachbart zum Dichtbereich den Vorteil, dass geringe Mengen des fließfähigen Materials, welche durch den Dichtbereich hindurchtreten, in der Ringnut gesammelt werden und beim nächsten Spritzvorgang sofort mit verwertet werden.

Von der Ringnut aus kann ein radialer Verbindungsabschnitt vorgesehen sein, der die Verbindung zur Mündung darstellt. Entsprechend fließt das fließfähige Material von der Zuführöffnung in der Zylinderwand über die axiale Nut im Kolben in eine Ringnut, von wo aus das Material über einen radialen Verbindungsabschnitt in die zentral oder konzentrisch zur Kolbenlängsachse vorgesehene Mündung gelangt. Der radiale Verbindungsabschnitt, der als radiale Bohrung ausgeführt sein kann, wird vorzugsweise gegenüberliegend dem Anschluss von axialer Nut und Ringnut vorgesehen.

Die Zuführöffnung in der Zylinderwand kann entsprechend der axialen Nut im Kolben in Richtung der Längsachse des Kolbens bzw. des Zylinders eine größere Öffnungsweite aufweisen als quer dazu, um ein leichtes Einfließen in die axiale Nut zu gewährleisten.

Die in Richtung der Längsachse des Kolbens bzw. Zylinders gestreckte Zuführöffnung in Form eines Langlochs hat zudem die Wirkung, dass die axiale Verstellbarkeit des Kolbens, bei welcher sichergestellt ist, dass der Fließkanal keine Toträume für das zugeführte plastifizierte Material bildet, erweitert wird. Damit ist eine größere Variabilität hinsichtlich der Endstellung des Kolbens, in welcher noch eine vollständige Zwangs- bzw. Selbstspülung erfolgt, gegeben. Entsprechend wird nach einem weiteren Aspekt der vorliegenden Erfindung dafür selbständig und in Kombination mit den anderen Aspekten Schutz begehrt.

Für das gleichwohl in den Bereich zwischen Kolben und Zylinderinnenwand eindringende und von dort in den hinteren, als dem von der Düseneinheit abgewandten Bereich des Zylinders, gelangende Material, ist dort erfindungsgemäß nach einem weiteren Aspekt, für den ebenfalls unabhängig und in Kombination mit den anderen Aspekten der Erfindung Schutz begehrt wird, ein Abstreifteil vorgesehen, welches eine flächige Anlage zur Kolbenaußenwand bildet und an der Stirnseite eine Abstreiffläche ausbildet, die schräg zur Kolbenlängsachse vorgesehen ist. Durch die schräge Ausbildung der Abstreiffläche in einer einzigen Ebene entsprechend der Stirnseite wird sowohl festes als auch teilweise flüssiges Material in effektiver Weise in eine Abführöffnung in der Zylinderwand transportiert ohne zusätzliche Maßnahme vorsehen zu müssen.

Das Abstreifteil ist vorzugsweise als Zylinderhülse oder -ring mit einer zur Längsachse schräg verlaufenden Stirnseite ausgebildet. Vorzugsweise ist das Abstreifteil aus Metall und insbesondere aus Messing oder einer Legierung davon gebildet.

Um eine exakte Anpassung des Abstreifteils an den Kolben zu ermöglichen, kann das Abstreifteil mit einem Ausgleichsspiel im Zylinder aufgenommen sein. Insbesondere kann eine ringförmige Aussparung am Zylinderende dazu vorgesehen sein, das Abstreifteil aufzunehmen, welches insbesondere mit einem entsprechenden Halteteil am Zylinderende befestigt werden kann.

Bei der erfindungsgemäßen Kolbeneinspritzeinheit kann die Plastifizierungseinheit, welche beispielsweise durch einen Schneckenextruder gebildet sein kann, seitlich versetzt zur Kolben- oder Zylinderlängsachse der Kolbeneinspritzeinheit angeordnet sein. Entsprechend kann das fließfähige Materials aus der Plastifizierungseinheit unter einem Winkel zwischen 0° und 180° zur Kolben- oder Zylinderlängsachse abgegeben werden.

Zwischen Plastifizierungseinheit und Zuführöffnung im Zylinder kann ein Umlenkteil vorgesehen sein, welches das fließfähige Material von der Plastifizierungseinheit zur Zuführöffnung fuhrt und insbesondere eine Zuführung des fließfähigen Materials senkrecht zur Kolben- oder Zylinderlängsachse ermöglicht.

Nach einem weiteren Aspekt der vorliegenden Erfindung, für den wiederum selbständig und in Kombination mit den anderen Aspekten der vorliegenden Erfindung Schutz begehrt wird, sind Plastifizierungseinheit und Umlenkteil nicht fest miteinander verbunden, sondern stoßen lediglich aneinander an, so dass sich eine Stoßverbindung ergibt.

Die Stoßverbindung kann beispielsweise eine Kugelkalottenverbindung sein, welche mit den beiden aufeinander stoßenden Teilen, also Plastifizierungseinheit und Umlenkteil, gegeneinander gepresst und in Stoßrichtung fest und/oder Druck gehalten wird. Allerdings ermöglicht eine derartige Verbindung Bewegungsfreiheitsgrade in anderen Richtungen und/oder um Drehachse, so dass Ausgleichsbewegungen z.B. auf Grund von unterschiedlichen thermischen Ausdehnungen möglich sind.

### KURZBESCHREIBUNG DER FIGUREN

Weitere Vorteile, Kennzeichen und Merkmale der vorliegenden Erfindung werden bei der nachfolgenden detaillierten Beschreibung eines Ausführungsbeispiels anhand der beigefügte Zeichnungen deutlich. Die Zeichnungen zeigen hierbei in rein schematischer Weise in
- Figur 1: eine Schnittansicht durch eine erfindungsgemäße Kolbeneinspritzeinheit;
- Figur 2: eine Schnittansicht durch die Kolbeneinspritzeinheit aus Figur 1 entlang der Schnittlinie A-A; und in
- Figur 3: eine Schnittansicht durch die Kolbeneinspritzeinheit aus Figur 1 entlang der Schnittlinie B-B.

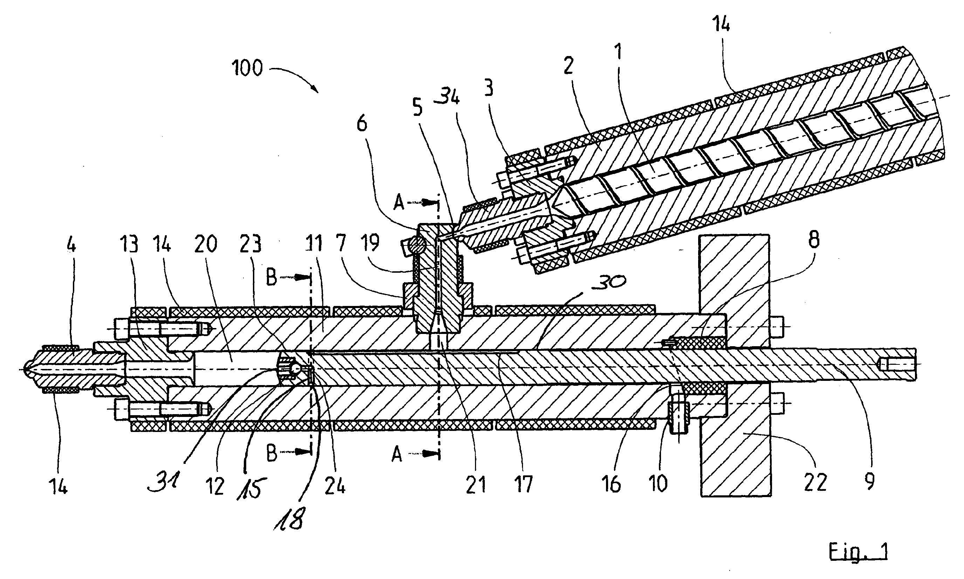

In Figur 1 ist eine Ausführungsform einer erfindungsgemäßen Kolbeneinspritzeinheit 100 in einer Schnittdarstellung gezeigt. Die Kolbeneinspritzeinheit umfasst einen Zylinder 11, in welchem ein Kolben 9 beweglich angeordnet ist. An einem Ende des Zylinders 11 ist eine Düse 4 vorgesehen, durch die fließfähiges Material, welches sich im Stauraum 20 zwischen Düse 4 und dem der Düse 4 zugewandten Ende des Kolbens 9 befindet, durch die Düse 4 gepresst werden kann. Entsprechend kann die Düse 4 mit einer Spritzgussform in Verbindung stehen, so dass das fließfähige Material in die Spritzgussform gepresst wird.

Das fließfähige Material wird in einer Extruderschnecke mit dem Extruderzylinder 2 und der Schnecke 1 plastifiziert und über ein Umlenkteil 6 über die Zuführöffnung 21 in Form eines Langlochs in den Zylinder 11 eingebracht.

Die Extruderschnecke weist an einem Ende des Extruderzylinders einen Extruderzylinderkopf 3 auf, welcher in Verbindung mit einer Extruderdüse 34 steht, um das von der Schnecke 1 geförderte Material durch die Extruderdüse 34 an das Umlenkteil 6 abzugeben. Um den Extruderzylinder 2 sind Heizbänder 14 vorgesehen, die zur Erwärmung und Temperierung des Extruderzylinders und somit des in dem Extruderzylinder befindlichen Materials dienen.

Die Extruderdüse 34 ist über eine Kugelkalottenverbindung 5 mit dem Umlenkteil 6 verbunden, wobei ein Verbindungskanal in Form einer Verbindungsbohrung 19 in dem Umlenkteil 6 vorhanden ist, um das von der Extruderschnecke erhaltene Material in die Zuführöffnung 21 des Zylinders 11 zu führen. Der Extruderzylinder 2 wird mit dem Kugelsegmentteil der Extruderdüse 34 in die entsprechende komplementäre Ausnehmung des Umlenkteils gedrückt, wobei in gewissen Grenzen eine Beweglichkeit des Extruderzylinders 2 zum Umlenkteil unter Aufrechterhaltung der Kanalverbindung möglich ist. Damit können in einfacher Weise Ausgleichsbewegungen zur Kompensation von z.B. unterschiedlichen thermischen Ausdehnungen realisiert werden.

Die Zuführöffnung 21 in Form eines Langlochs im Zylinder 11 ist in Richtung der Längsachse des Zylinders 11 bzw. des Kolbens 9 aufgeweitet, so dass sie in der Richtung parallel zur Längsachse des Kolbens 9 bzw. des Zylinders 11 eine größere Öffnungsweite aufweist als quer dazu oder als der überwiegende Teil des entsprechenden Verbindungskanals 19 im Umlenkteil. Entsprechend ist auch der Verbindungskanal 19 in dem Bereich, in dem er in die Zuführöffnung 21 mündet, entsprechend aufgeweitet bzw. in Form eines Langlochs gestaltet. Die axial gestreckte Zuführöffnung hat den Vorteil, dass ein größerer Bereich zur Kommunikation mit der axialen Nut 17 des Fließkanals (siehe unten) zur Verfügung steht, so dass in einem größeren Stellungsbereichs des Kolbens 9 Toträume im Fließkanal vermieden werden.

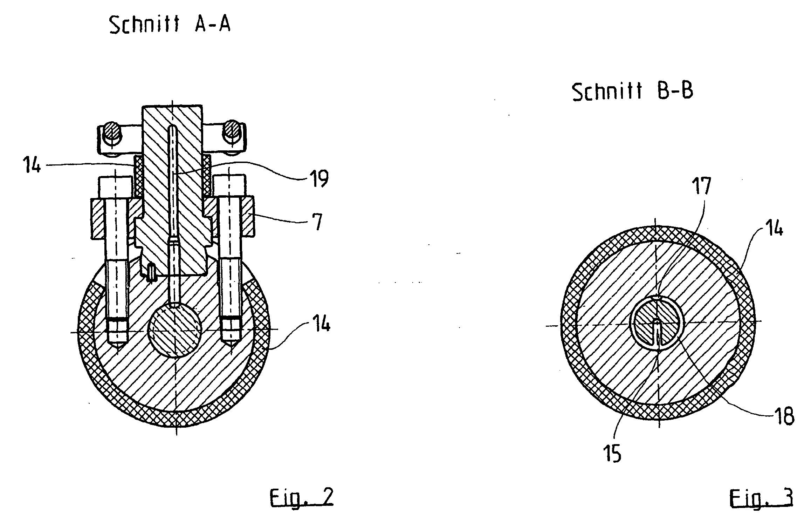

Das Umlenkteil 6 ist über ein Spannteil 7, welches mit Schraubverbindungen an dem Zylinder 11 befestigt ist, wie insbesondere aus Figur 2 ersichtlich ist, fest mit dem Zylinder 11 verbunden. Allerdings könnte auch das Umlenkteil in einer Art Stoßverbindung am Zylinder 11 angeordnet sein, wobei gleichzeitig eine starre Verbindung mit dem Extruderzylinder 2 möglich wäre. Auch im Bereich des Umlenkteils sind Heizbänder 14 vorgesehen, wie sich ebenfalls aus der Figur 2 ergibt.

Der Kolben 9 weist an seinem der Düse 4 zugeordneten Ende einen Dichtbereich 23 auf, indem die Außenfläche des Kolbens 9 flächig an der Innenwand des Zylinders 11 anliegt, um durch das gegenseitige Anliegen eine Abdichtung zu schaffen. Auf der von der Düse 4 abgewandten Seite des Dichtbereichs 23 schließt sich unmittelbar eine radiale Nut bzw. Ringnut 18 an, wie sich insbesondere aus der Schnittansicht der Figur 3 ergibt. Diese Ringnut 18 steht einerseits in Verbindung mit einer radialen Bohrung 18 und andererseits mit einer axialen Nut 17, welche wiederum die Verbindung zur Zuführöffnung 21 herstellt. Entsprechend ist es möglich, dass fließfähiges Material, welches in der Extruderschnecke 1 plastifiziert bzw. fließfähig gemacht wurde, über die Extruderdüse 34 und den Verbindungskanal 19 des Umlenkteils 6 in die axiale Nut 17 des Kolbens 9 gelangt und von dort über die Ringnut 18 in die radiale Bohrung 15 bzw. den radialen Verbindungsabschnitt gelangt. Über eine zentrische Bohrung 24 gelangt das fließfähige bzw. plastifizierte Material in den Mündungsbereich 31 des durch die zentrische Bohrung 24, den radialen Verbindungsabschnitt 15, die Ringnut 18 und die axiale Nut 17 gebildeten Fließkanals. Über die Mündung 31, welche mehrere verzweigte Mündungsöffnungen aufweist, gelangt das fließfähige Material in den Stauraum 20, um von dort durch die Düse 4 gepresst zu werden. Um ein Zurückfließen des fließfähigen Materials aus dem Stauraum 20 in den Fließkanal 15, 18, 24, 17 zu vermeiden, ist am Ende der zentrischen Bohrung im Bereich der Mündung ein Rückschlagventil 12 vorgesehen, welches im Kolben 9 aufgenommen ist und deshalb auch als Kolbenventil bezeichnet wird.

Das Rückschlagventil 12 kann beispielsweise durch einen beweglichen Dichtkörper gebildet sein, welcher sich in einem Verteilraum der Mündung 31 so bewegen kann, dass die Mündungsöffnungen freigegeben sind, wenn das fließfähige Material durch die zentrische Bohrung 24 in Richtung der Mündung 31 strömt, während bei einem entgegengesetzten Druck der Dichtkörper sich an eine Dichtfläche am Ende der zentrischen Bohrung 24 anlegt und diese verschließt. Entsprechend kann bei einer Bewegung des Kolbens 9 in Richtung auf die Düse 4 und entsprechendem Druckaufbau bei vollgefülltem Stauraum 20 ein Zurückfließen des fließfähigen Materials durch die Mündung 31 und den Fließkanal 15, 18, 24, 17 durch das Rückschlagventil bzw. das Kolbenventil 12 verhindert werden. Da zudem im Bereich des Kolbenkopfes, also an dem Kolbenende, das der Düse 4 zugewandt ist, der Dichtbereich 23 vorgesehen ist, kann verhindert werden, dass fließfähiges Material entgegen der Pressrichtung in den Zwischenraum zwischen Kolben 9 und Zylinderinnenwand gelangt. Sollten kleinere Mengen an fließfähigem Material durch geringfügige Undichtigkeit des Dichtbereichs 23 in den Zwischenraum zwischen Kolbenaußenwand und Zylinderinnenwand gelangen, so werden diese durch die Ringnut 18, die in unmittelbarer Nachbarschaft zum Dichtbereich 23 im Kolben 9 vorgesehen ist, aufgefangen und beim nächsten Spritzvorgang wieder verwendet.

Um ein Zurückfließen des fließfähigen Materials aus der axialen Nut 17 entgegen der Spritzrichtung bzw. Kolbenbewegung 9 in Richtung auf die Düse 4 zu vermeiden, ist ein zweiter Dichtbereich 30 vorgesehen, welcher die axiale Nut 17 gegenüberliegend dem ersten Dichtbereich 23 abschließt.

Sollten durch diesen Dichtbereich 30 geringfügige Mengen an plastifiziertem Material in den Bereich zwischen Kolbenaußenwand und Zylinderinnenwand gelangen, so ist an dem Ende des Zylinders 11, welches der Düse 4 gegenüberliegt, ein Abstreifteil 8 vorgesehen, welches in einer ringförmigen Ausnehmung des Zylinders 11 angeordnet ist. Das Abstreifteil 8 ist durch eine ringförmige Zylinderhülse, vorzugsweise aus Metall und insbesondere aus Messing gebildet, welche eine schräge Stirnseite 16 an der der Düse zugewandten Seite aufweist. Die schräge Stirnseite 16 dient als Abstreiffläche und steht in Verbindung mit einer Abführöffnung 10, welche auch als Leckagebohrung bezeichnet werden kann.

Da die Innenfläche des hülsenförmigen Abstreifteils 8 flächig an der Außenfläche des Kolbens 9 anliegt, wird überschüssiges fließfähiges Material, welches möglicherweise an der Außenfläche des Kolbens 9 vorliegt, durch die Abstreiffläche 16 in Richtung der Abführöffnung 10 befördert, wo es entsprechend aufgesammelt werden kann. Damit wird vermieden, dass zu spritzendes Material, welches in geringen Mengen an der Kolbenaußenfläche haften kann, unkontrolliert am der Düse 4 gegenüberliegenden Ende des Zylinders 11 abgegeben wird.

Das Abstreifteil 8 ist durch ein Aufnahmeteil 22 in dem Zylinder 11 gehalten, wozu das Aufnahmeteil 22 über Schraubverbindungen an dem Zylinder befestigt ist.

Am Umfang des Zylinders 11 sowie an der Düse 4 und an dem die Düse 4 und den Zylinder 11 verbindenden Zylinderkopf 13 sind Heizbänder 14 vorgesehen, um die entsprechenden Komponenten und das darin geführte plastifizierte Material auf einer bestimmten Temperatur zu halten, insbesondere zu heizen, damit die entsprechende Fließfähigkeit erhalten bleibt.

### Bezugszeichenliste

- 1: Schnecke
- 2: Extruderzylinder
- 3: Extruderzylinderkopf
- 4: Düse
- 5: Kugelkalotte
- 6: Umlenkteil
- 7: Spannteil
- 8: Abstreifteil
- 9: Kolben
- 10: Leckagebohrung/Abführöffnung
- 11: Zylinder
- 12: Kolbenventil/Rückschlagventil
- 13: Zylinderkopf
- 14: Heizband
- 15: Radiale Bohrung/radialer Verbindungsabschnitt
- 16: Abführschräge/Stirnseite/Abstreiffläche
- 17: Axiale Nut
- 18: Radiale Nut/Ringnut
- 19: Verbindungsbohrung/Verbindungskanal
- 20: Stauraum
- 21: Langloch/Zuführöffnung
- 22: Aufnahmeteil
- 23: Kolbendichtfläche/erster Dichtbereich
- 24: Zentrische Bohrung
- 30: Kolbendichtfläche/zweiter Dichtbereich
- 31: Mündung
- 34: Extruderdüse
- 100: Kolbeneinspritzeinheit

## Patentansprüche

1. Kolbeneinspritzeinheit für eine Spritzgussmaschine mit einem Zylinder (11), einem darin verschiebbar geführten Kolben (9) und einer an einem Ende des Zylinders angeordneten Düseneinheit (4), wobei mittels des Kolbens fließfähiges Material durch die Düseneinheit (4) gepresst werden kann, und wobei eine Zuführöffnung (21) in der Zylinderwand in einem Bereich vorgesehen ist, der in jeder Position des Kolbens (9) während des Betriebs auf der von der Düseneinheit abgewandten Seite des der Düseneinheit zugeordneten Kolbenendes liegt, so dass quer zur Kolben- oder Zylinderlängsachse das fließfähige Material in den Zylinder (11) eingeführt werden kann, wobei der Kolben (9) mindestens einen ersten Dichtbereich (23) an dem der Düseneinheit zugeordneten Kolbenende aufweist, wobei der Dichtbereich eine Außenfläche des Kolbens und eine Innenfläche des Zylinders aufweist, die durch gegenseitige flächige Anlage abdichten, und wobei im Bereich zwischen Zuführöffnung und dem der Düseneinheit zugeordneten Kolbenende ein Fließkanal (15, 17, 18, 24) für das fließfähige Material vorgesehen ist, welcher in das der Düseneinheit zugewandte Kolbenende beabstandet von der Außenfläche des Kolbens mündet,
**dadurch gekennzeichnet, dass**
der Fließkanal eine axial im Kolben verlaufende Nut (17) und eine Ringnut (18) umfasst.

2. Kolbeneinspritzeinheit nach Anspruch 1,
**dadurch gekennzeichnet, dass**
der Fließkanal beim Materialtransport durch den Fließkanal einer vollständigen Zwangsspülung unterliegt.

3. Kolbeneinspritzeinheit nach einem der vorhergehenden Ansprüche,
**dadurch gekennzeichnet, dass**
mindestens ein zweiter, von dem ersten Dichtbereich beabstandeter Dichtbereich (30) vorgesehen ist und der Fließkanal (15, 17, 18, 24) zumindest teilweise zwischen erstem (23) und zweitem (30) Dichtbereich vorgesehen ist.

4. Kolbeneinspritzeinheit nach einem der vorhergehenden Ansprüche,
**dadurch gekennzeichnet, dass**
eine Mündung (31) des Fließkanals an der der Düseneinheit zugewandten Stirnseite des Kolbens (9) in einem zentralen, der Kolbenlängsachse nahen Bereich, insbesondere konzentrisch zur Kolbenlängsachse vorliegt.

5. Kolbeneinspritzeinheit nach einem der vorhergehenden Ansprüche,
**dadurch gekennzeichnet, dass**
der Fließkanal ein Rückschlagventil (12) aufweist und das Rückschlagventil (12) im Inneren des Kolbens vorgesehen ist, wobei das Rückschlagventil (12) in einem Verteilraum des Fließkanals in der Nähe der Mündung, insbesondere mit einem in dem Verteilraum beweglich angeordneten Dichtkörper vorgesehen ist.

6. Kolbeneinspritzeinheit nach einem der vorhergehenden Ansprüche,
**dadurch gekennzeichnet, dass**
die Ringnut (18) unmittelbar benachbart zum ersten Dichtbereich (23) vorgesehen ist und/oder die axial verlaufende Nut (17) in die Ringnut (18) mündet.

7. Kolbeneinspritzeinheit nach einem der vorhergehenden Ansprüche,
dadurch gekennzcichnet, dass
die Ringnut (18) in einen radialen Verbindungsabschnitt (15) mündet, welche in Verbindung mit der Mündung (31) des Fließkanals steht.

8. Kolbeneinspritzeinheit nach einem der vorhergehenden Ansprüche,
**dadurch gekennzeichnet, dass**
die Zuführöffnung (21) in Richtung der Längsachse des Kolbens eine größere Öffnungsweite aufweist als quer dazu.

9. Kolbeneinspritzeinheit nach einem der vorhergehenden Ansprüche,
**dadurch gekennzeichnet, dass**
ein Abstreifteil (8) zur flächigen Anlage an die Kolbenaußenwand an dem Zylinder (11) vorgesehen ist, wobei eine quer zur Kolben- oder Zylinderlängsachse verlaufende, den Kolben (9) umgebende Abstreiffläche in einer Ebene ausgebildet ist, welche schräg zur Kolbenlängsachse vorgesehen ist.

10. Kolbeneinspritzeinheit nach Anspruch 9,
**dadurch gekennzeichnet, dass**
die Abstreiffläche (16) mit einer Abführöffnung (10) im Zylinder (11) korrespondiert und/oder das Abstreifteil (8) eine Zylinderhülse oder eine Ring mit zur Längsachse schräg verlaufender Stirnseite (16) ist und/oder das Abstreifteil (8) aus Metall, insbesondere aus Messing oder einer Legierung davon ist und/oder das Abstreifteil (8) mit einem Ausgleichsspiel in dem Zylinder aufgenommen ist und/oder das Abstreifteil (8) an dem der Düseneinheit gegenüber liegenden Ende des Zylinders (11) in einer ringförmigen Aussparung des Zylinders angeordnet ist und/oder das Abstreifteil (8) beabstandet vom zweiten Dichtbereich (30) oder im Bereich des zweiten Dichtbereichs vorgesehen ist.

11. Kolbeneinspritzeinheit nach einem der vorhergehenden Ansprüche,
**dadurch gekennzeichnet, dass**
eine Plastifizierungseinheit (1, 2) seitlich versetzt zur Kolben- oder Zylinderlängsachse angeordnet ist, welche das fließfähige Material unter einem Winkel größer 0° und kleiner 180° zur Kolben- oder Zylinderlängsachse abgibt.

12. Kolbeneinspritzeinheit nach Anspruch 11,
**dadurch gekennzeichnet, dass**
ein Umlenkteil (6) zwischen Plastifizierungseinheit und Zuführöffnung vorgesehen ist, wobei zumindest zwischen Plastifizierungseinheit und Umlenkteil eine Stoßverbindung vorgesehen ist.

13. Kolbeneinspritzeinheit nach einem der Ansprüche 11 oder 12,
**dadurch gekennzeichnet, dass**
die Stoßverbindung in Richtung der aufeinander treffenden Stöße fest gehalten und/oder vorgespannt ist und/oder dass die Stoßverbindung ein oder mehrere Bewegungsfreiheitsgrade für Ausgleichsbewegungen aufweist und/oder dass die Stoßverbindung eine Kugelkalottenverbindung ist.

14. Kolbeneinspritzeinheit nach einem der Ansprüche 11 bis 13,
**dadurch gekennzeichnet, dass**
die Plastifizierungseinheit (1, 2) einen Schneckenextruder oder Doppelschneckenextruder umfasst.

## Claims

1. Piston injection unit for an injection moulding machine comprising a barrel (11), a a piston (9) displaceably guided therein and, arranged at one end of the barrel, a nozzle unit (4), wherein, by means of the piston, flowable material can be pressed through the nozzle unit (4) and wherein a feed opening (21) in the barrel wall is provided in a region which, in each position of the piston (9) during operation, is located on that side of the end of the piston which is associated with the nozzle unit and which is facing away from the nozzle unit, such that, transverse to the longitudinal axis of the piston or barrel, the flowable material can be introduced into the barrel (11), wherein the piston (9) has at least one first sealing region (23) on the end of the piston associated with the nozzle unit, wherein the sealing region comprises an outer surface of the piston and an inner surface of the barrel, which seal through mutual surface contact, and wherein a flow channel (15, 17, 18, 24) for the flowable material is provided in the region between the feed opening and the end of the piston associated with the nozzle unit, said flow channel opening at a distance from the outer surface of the piston into that end of the piston which faces towards the nozzle unit,
**characterised by** the fact that
the flow channel comprises a groove (17) extending axially in the piston and an annular groove (18).

2. Piston injection unit in accordance with claim 1,
**characterised by** the fact that
the flow channel is completely forcibly purged during transport of material through the flow channel.

3. Piston injection unit in accordance with any of the previous claims, **characterised by** the fact that
at least a second sealing region (30) is provided at a spaced distance from the first sealing region, and the flow channel (15,17,18,24) is provided at least in part between first (23) and second (30) sealing region.

4. Piston injection unit in accordance with any of the previous claims, **characterised by** the fact that
a mouth (31) of the flow channel at the end-face of the piston (9) facing towards the nozzle unit is present in a central region close to the longitudinal piston axis, and in particular concentrically with the longitudinal axis of the piston.

5. Piston injection unit in accordance with any of the previous claims,
**characterised by** the fact that
the flow channel has a check valve (12) and the check valve (12) is provided inside the piston, wherein the check valve (12) is provided in a distribution chamber of the flow channel in the vicinity of the mouth, in particular is provided with a sealing element movably arranged in the distribution chamber.

6. Piston injection unit in accordance with any of the previous claims,
**characterised by** the fact that
the annular groove (18) is provided immediately adjacent the first sealing region (23) and/or the axially extending groove (17) opens into the annular groove (18).

7. Piston injection unit in accordance with any of the previous claims,
**characterised by** the fact that
the annular groove (18) opens into a radial connecting portion (15) which is in communication with the mouth (31) of the flow channel.

8. Piston injection unit in accordance with any of the previous claims,
**characterised by** the fact that
the feed opening (21) in the direction of the longitudinal axis of the piston has a larger opening width than transverse thereto.

9. Piston injection unit in accordance with any of the previous claims,
**characterised by** the fact that
a scraper member (8) for full-area contact with the piston outer wall is provided at the barrel (11), wherein a scraper surface, which extends transversely to the longitudinal axis of the piston or barrel and which surrounds the piston (9), is formed in a plane which is provided obliquely to the longitudinal axis of the piston.

10. Piston injection unit in accordance with claim 9,
**characterised by** the fact that
the scraper surface (16) corresponds with a discharge opening (10) in the barrel (11) and/or the scraper member (8) is a barrel sleeve or a ring with an end-face (16) which extends obliquely to the longitudinal axis and/or the scraper member (8) is made of metal, in particular of brass or an alloy thereof, and/or the scraper member (8) is accommodated with a compensating play in the barrel and/or the scraper member (8) at the end of the barrel (11) opposite the nozzle unit is arranged in an annular recess of the barrel and/or the scraper member (8) is spaced at a distance from the second sealing region (30) or is provided in the region of the second sealing region.

11. Piston injection unit in accordance with any of the previous claims,
**characterised by** the fact that
a plasticising unit (1, 2) is arranged laterally offset to the longitudinal axis of the piston or barrel and delivers the flowable material at an angle greater than 0° and less than 180° to the longitudinal axis of the piston or barrel.

12. Piston injection unit in accordance with claim 11,
**characterised by** the fact that
a baffle (6) is provided between the plasticising unit and feed opening, wherein a butt joint is provided at least between the plasticising unit and baffle.

13. Piston injection unit in accordance with any of claims 11 or 12,
**characterised by** the fact that
the butt joint in the direction of the contiguous butt ends is held firmly and/or is pre-tensioned and/or that the butt joint has one or more degrees of freedom for movement compensation and/or that the joint connection is a ball joint.

14. Piston injection unit in accordance with any of claims 11 to 13,
**characterised by** the fact that
the plasticising unit (1, 2) comprises a screw extruder or twin-screw extruder.

## Revendications

1. Unité d'injection à piston pour une machine de moulage par injection avec un cylindre (11), un piston (9) qui y est guidé en étant coulissant et une unité de tuyère (4) placée à une extrémité du cylindre, du matériau fluide pouvant être pressé à travers l'unité de tuyère (4) au moyen du piston et une ouverture d'amenée (2) étant prévue dans la paroi du cylindre dans une zone qui se situe, dans chaque position du piston (9) pendant le fonctionnement sur le côté de l'extrémité du piston affectée à l'unité de tuyère qui est opposé à l'unité de tuyère si bien que le matériau fluide peut être introduit dans le cylindre (11) transversalement par rapport à l'axe longitudinal du piston ou du cylindre, le piston (9) présentant une première zone d'étanchéité (23) à l'extrémité du piston affectée à l'unité de tuyère, la zone d'étanchéité présentant une surface extérieure du pison et une surface intérieure du cylindre qui assurent l'étanchéité par appui mutuel à plat en surface et un canal d'écoulement (15, 17, 18, 24) étant prévu pour le matériau fluide dans la zone entre l'ouverture d'amenée et l'extrémité du piston affectée à l'unité de tuyère, canal qui débouche dans l'extrémité du piston qui est tournée vers l'unité de tuyère en étant espacé de la surface extérieure du piston,
**caractérisée en ce**
**que** le canal d'écoulement comprend une rainure (17) dans le sens axial dans le piston et une rainure annulaire (18).

2. Unité d'injection à piston selon la revendication 1,
**caractérisée en ce**
**que** le canal d'écoulement est soumis, lors du transport du matériau par le canal d'écoulement, à un rinçage forcé complet.

3. Unité d'injection à piston selon l'une des revendications précédentes,
**caractérisée en ce**
**qu'**il est prévu au moins une seconde zone d'étanchéité (30) espacée de la première zone d'étanchéité et que le canal d'écoulement (15, 17, 18, 24) est prévu au moins partiellement entre la première (23) et la seconde (30) zone d'étanchéité.

4. Unité d'injection à piston selon l'une des revendications précédentes,
**caractérisée en ce**
**qu'**une embouchure (31) du canal d'écoulement existe sur le côté frontal du piston (9) qui est tourné vers l'unité de tuyère dans une zone centrale, proche de l'axe longitudinal du piston, en particulier en étant concentrique par rapport à l'axe longitudinal du piston.

5. Unité d'injection à piston selon l'une des revendications précédentes,
**caractérisée en ce**
**que** le canal d'écoulement présente un clapet de non-retour (12) et que le clapet de non-retour (12) est prévu à l'intérieur du piston, le clapet de non-retour (12) étant prévu dans un espace de distribution du canal d'écoulement à proximité de l'embouchure, en particulier avec un corps d'étanchéité placé mobile dans l'espace de distribution.

6. Unité d'injection à piston selon l'une des revendications précédentes,
**caractérisée en ce**
**que** la rainure annulaire (18) est prévue à proximité immédiate de la première zone d'étanchéité (23) et/ou la rainure dans le sens axial (17) débouche dans la rainure annulaire (18).

7. Unité d'injection à piston selon l'une des revendications précédentes,
**caractérisée en ce**
**que** la rainure annulaire (18) débouche dans la section de jonction radiale (15) qui est en relation avec l'embouchure (31) du canal d'écoulement.

8. Unité d'injection à piston selon l'une des revendications précédentes,
**caractérisée en ce**
**que** l'ouverture d'amenée (21) présente une plus grande largeur d'ouverture dans le sens de l'axe longitudinal du piston que transversalement par rapport à celui-ci.

9. Unité d'injection à piston selon l'une des revendications précédentes,
**caractérisée en ce**
**qu'**il est prévu une partie de raclement (8) est prévue sur le cylindre (11) pour l'appui à plat en surface contre la paroi extérieure du piston, une surface de raclement transversale par rapport à l'axe longitudinal du piston ou du cylindre, qui entoure le piston (9), étant configurée dans un plan qui est prévu oblique par rapport à l'axe longitudinal du piston.

10. Unité d'injection à piston selon la revendication 9,
**caractérisée en ce**
**que** la surface de raclement (16) correspond à une ouverture d'évacuation (10) dans le cylindre (11) et/ou la partie de raclement (8) est une douille de cylindre ou un anneau avec un côté frontal (16) oblique par rapport à l'axe longitudinal et/ou que la partie de raclement (8) est en métal, en particulier en laiton ou en un alliage de laiton et/ou la partie de raclement (8) est logée dans le cylindre avec un jeu de compensation et/ou la partie de raclement (8) est placée dans un évidement annulaire du cylindre à l'extrémité du cylindre (11) qui est opposée à l'unité de tuyère et/ou la partie de raclement (8) est prévue espacée de la seconde zone d'étanchéité (30) ou dans la zone de la seconde zone d'étanchéité.

11. Unité d'injection à piston selon l'une des revendications précédentes,
**caractérisée en ce**
**qu'**une unité de plastification (1, 2) est placée décalée latéralement par rapport à l'axe longitudinal du piston ou du cylindre, unité qui délivre le matériau fluide dans un angle supérieur à 0° et inférieur à 180° par rapport à l'axe longitudinal du piston ou du cylindre.

12. Unité d'injection à piston selon la revendication 11,
**caractérisée en ce**
**qu'**il est prévu une pièce déviation (6) entre l'unité de plastification et l'ouverture d'amenée, une jonction bout à bout étant prévue au moins entre l'unité de plastification et la pièce de déviation.

13. Unité d'injection à piston selon l'une des revendications 11 ou 12,
**caractérisée en ce**
**que** la jonction bout à bout est maintenue fixe et/ou précontrainte en direction des joints qui se rejoignent et/ou que la jonction bout à bout présente un ou plusieurs degrés de liberté de mouvement pour des mouvements de compensation et/ou que la jonction bout à bout est une jonction à calotte sphérique.

14. Unité d'injection à piston selon l'une des revendications 11 ou 13,
**caractérisée en ce**
**que** l'unité de plastification comprend une extrudeuse à vis ou une extrudeuse à double vis.
